# FASCICULE DE BREVET EUROPEEN

(11) **EP 0 862 286 B1**
(45) Date de publication et mention de la délivrance du brevet: **10.01.2001**
(21) Numéro de dépôt: 98400353.3
(22) Date de dépôt: 16.02.1998
(51) Int. Cl.: H04B 10/18

(54) **Régénération optique pour des systèmes de transmission à fibre optique à signaux non solitons**
Optische Regenerierung für faseroptische Übertragungssysteme mit nicht-Soliton Signalen
Optical regeneration for optical fibre transmission systems with non-soliton signals

(30) Priorité: 18.02.1997 FR 9701902
(43) Date de publication de la demande: 02.09.1998
(73) Titulaire: ALCATEL, 75008 Paris (FR)
(72) Inventeur: Desurvire, Emmanuel, 91680 Bruyeres Le Chatel (FR); Maunand, Elisabeth, 75013 Paris (FR)
(74) Mandataire: Lamoureux, Bernard

(56) Documents cités:
- EP-A- 0 718 992
- BIGO S ET AL: "BIT-RATE ENHANCEMENT THROUGH OPTICAL NRZ-TO-RZ CONVERSION AND PASSIVE TIME-DIVISION MULTIPLEXING FOR SOLITON TRANSMISSION SYSTEMS" ELECTRONICS LETTERS, vol. 30, no. 12, 9 juin 1994, page 984/985 XP000459796
- NAKAZAWA M ET AL: "40GBIT/S WDM (10GBIT/S X 4 UNEQUALLY SPACED CHANNELS) COLITON TRANSMISSION OVER 10000KM USING SYNCHRONUS MODULATION AND NARROW BAND OPTICAL FILTERING" ELECTRONICS LETTERS, vol. 32, no. 9, 25 avril 1996, pages 828-830, XP000595674

## Description

La présente invention a pour objet un procédé de régénération optique pour des systèmes de transmission à fibre optique à signaux non solitons. Elle concerne aussi un régénérateur pour de tels systèmes de transmission.

La transmission d'impulsions RZ (retour à zéro) est actuellement couramment utilisé dans des systèmes de transmission à fibre optique terrestres. Un des problèmes qui se posent, notamment pour les systèmes existants, est celui de l'augmentation du débit ou de la distance de transmission sans erreur. Diverses solutions ont été proposées. Une première approche consiste à réduire la durée des impulsions RZ, et à utiliser un multiplexage temporel. Cette approche est limitée par la gigue provoquée par la propagation et par les divers composants optiques du système de transmission. Des problèmes analogues se posent pour les systèmes de transmission utilisant des impulsions NRZ (non retour à zéro).

Pour pallier ce problème, il est connu d'effectuer dans des régénérateurs une conversion optoélectronique du signal, et de régénérer le signal électronique. Cette approche est intrinsèquement limitée par la bande passante des composants semiconducteurs utilisés. Elle est aussi limitée en terme de longueur maximale du système de transmission. Elle s'avère en outre coûteuse avec l'augmentation du débit.

Il a aussi été proposé d'effectuer une conversion de longueur d'onde, par rapport à une horloge locale de longueur d'onde différente et non-giguée, en appliquant le signal RZ gigué comme contrôle sur l'horloge. Cette technique, outre qu'elle implique de disposer d'une horloge locale, présente l'inconvénient d'être difficile à appliquer lorsque l'on utilise un multiplexage en longueur d'onde, ou plus généralement lorsqu'il est gênant de changer de longueur d'onde.

Par ailleurs, la transmission d'impulsions solitons ou solitons est un phénomène connu. Ces impulsions sont des impulsions RZ de largeur temporelle (FWHM, largeur d'impulsions à la moitié de la puissance maximale) faible par rapport au temps bit, qui présentent une relation déterminée entre la puissance, la largeur spectrale et la largeur temporelle, et qui se propagent généralement dans la partie à dispersion dite anormale d'une fibre optique. L'évolution de l'enveloppe d'une telle impulsion soliton dans une fibre monomode peut être modélisée par l'équation de Schrödinger non linéaire; la propagation repose sur un équilibre entre la dispersion anormale de la fibre et sa non-linéarité. Pour contrôler la gigue de tels signaux solitons, diverses solutions ont été proposées. Il est connu d'utiliser des systèmes de filtres guidants glissants, voir par exemple EP-A-0 576 208. Il a aussi été proposé de procéder à la modulation synchrone des signaux solitons. On peut pour cela utiliser des modulateurs de différents types, et notamment des modulateurs synchrones d'amplitude ou de phase utilisant l'effet Kerr. On trouvera dans H. Kubota et M. Nakazawa, Soliton Transmission Control in Time and Frequency Domains, IEEE Journal of Quantum Electronics, vol. 29 n° 3, 2189 ou dans N. J. Smith et N. J. Doran, Evaluating the Capacity of Phase Modulator-Controlled Long-Haul Soliton Transmission, Optical Fibers Technology I, 218-235 (1995) une revue des diverses techniques de contrôle ou de régénération des signaux solitons. Il a également été proposé dans EP-A-0 718 992 d'utiliser un NOLM (miroir optique non-linéaire) pour la régénération optique de signaux solitons par modulation synchrone.

Ces techniques ne sont pas limitées par la bande passante de composants électroniques. Toutefois, elles ne sont pas directement applicables à des impulsions RZ non-solitons, du fait de la différence des impulsions ou de leurs spectres par rapport à des signaux solitons.

La présente invention propose une solution originale et simple au problème du contrôle de la gigue des signaux optiques RZ non-solitons. On entend par signaux optiques non solitons, des signaux présentant une ou plusieurs des caractéristiques suivantes: largeur temporelle (FWHM) importante par rapport au temps bit, i.e. supérieures à environ 30à 40% de celui-ci; absence de relation déterminée entre la puissance, la largeur spectrale et la largeur temporelle; propagation généralement ou en moyenne dans la partie à dispersion normale ou à dispersion nulle d'une fibre optique; pas d'équilibre entre la dispersion et la non-linéarité au cours de la propagation.

L'invention permet aussi, dans certains modes de réalisation, de corriger non seulement la gigue ou le bruit de phase, mais encore le bruit d'amplitude des signaux RZ non-solitons. L'invention s'applique avec profit aux systèmes de transmission terrestre existants, dont elle permet une augmentation du débit ou de la distance maximale de transmission, sans nécessiter d'intervention sur le milieu de transmission. Elle permet ainsi, par simple ajout ou modifications des systèmes de contrôle, d'augmenter la capacité de liaisons existantes.

Plus précisément, l'invention propose un procédé de régénération de signaux optiques RZ non solitons, comprenant les étapes de
- compression des signaux RZ en signaux de type solitons;
- modulation optique synchrone des signaux de type solitons, en utilisant une horloge;
- décompression des signaux solitons modulés en signaux RZ non-solitons.

On peut prévoir une étape de récupération de l'horloge sur les signaux RZ non solitons, sur les signaux de type solitons, ou sur les signaux RZ non-solitons régénérés.

L'étape de compression comprend avantageusement au moins l'une des étapes suivantes:
- traitement spectral ou temporel de signaux optiques codés, notamment par filtrage spectral;
- amplification;
- propagation des signaux dans un milieu optique non-linéaire fortement dispersif.

L'étape de décompression comprend de préférence au moins l'une des étapes suivantes:
- étalement temporel,
- post-amplification.

Dans un mode de mise en oeuvre, l'étape de modulation optique synchrone des signaux de type solitons est répétée au moins deux fois.

On peut aussi prévoir au moins une étape de filtrage des signaux de type solitons, par un filtre choisi dans le groupe formé des filtres guidants, des filtres guidants glissants.

L'invention propose aussi un procédé de régénération de signaux optiques NRZ, comprenant:
- une étape de conversion des signaux optiques NRZ en signaux RZ non-solitons;
- une étape de régénération des signaux RZ non-solitons selon le procédé de l'invention; et
- une étape de conversion des signaux optiques RZ régénérés en signaux NRZ.

L'invention propose encore un procédé de régénération de signaux optiques RZ non-solitons multiplexés, comprenant:
- une étape de démultiplexage des signaux;
- une étape de régénération des signaux démultiplexés, selon le procédé de l'invention;
- une étape de multiplexage des signaux régénérés.

L'invention a aussi pour objet un procédé de régénération de signaux optiques RZ non-solitons multiplexés, comprenant:
- une étape de synchronisation des canaux du multiplex;
- une étape de régénération des signaux des canaux synchronisés, selon le procédé de l'invention.

Dans un mode de réalisation, l'invention propose un procédé de régénération de signaux optiques NRZ, comprenant:
- une étape de conversion des signaux optiques NRZ en signaux optiques RZ non-solitons;
- une étape de régénération des signaux optiques RZ non-solitons selon le procédé de l'invention; et
- une étape de conversion des signaux optiques RZ régénérés en signaux optiques NRZ.

Dans un autre mode de réalisation, l'invention propose un procédé de régénération de signaux optiques NRZ multiplexés, comprenant:
- une étape de démultiplexage et de conversion des signaux optiques NRZ en signaux optiques RZ non-solitons;
- une étape de régénération des signaux optiques RZ, selon le procédé de l'invention;
- une étape de multiplexage et de conversion des signaux optiques RZ régénérés en signaux optiques NRZ multiplexés.
en outre, l'invention propose un procédé de régénération de signaux optiques NRZ multiplexés, comprenant:
- une étape de conversion des signaux optiques NRZ en signaux optiques RZ non-solitons;
- une étape de synchronisation des canaux du multiplex;
- une étape de régénération des signaux optiques RZ non-solitons des canaux synchronisés, selon le procédé de l'invention; et
- une étape de conversion des signaux optiques RZ régénérés en signaux optiques NRZ.

L'invention a aussi pour objet un régénérateur de signaux optiques RZ non solitons, comprenant:
- des moyens de compression des signaux RZ en signaux de type solitons;
- des moyens de modulation optique synchrone des signaux de type solitons, en utilisant une horloge;
- des moyens de décompression des signaux solitons modulés en signaux RZ non-solitons.

Les moyens de modulation peuvent comprendre des moyens de récupération de l'horloge à partir des signaux RZ non solitons, des signaux de type solitons, ou des signaux RZ non-solitons régénérés.

Les moyens de compression comprennent avantageusement au moins l'un des moyens suivants:
- des moyens de traitement spectral ou temporel de signaux optiques codés, notamment des moyens de filtrage spectral;
- des moyens d'amplification;
- un milieu optique non-linéaire fortement dispersif, notamment à dispersion variable.

Les moyens de décompression comprennent de préférence au moins l'un des moyens suivants:
- des moyens d'étalement temporel;
- des moyens de post-amplification.

Dans un mode de réalisation, les moyens de compression ou les moyens de décompression comprennent une longueur de fibre optique.

On peut aussi prévoir des moyens pour cascader les moyens de modulation, pour au moins une partie des signaux de type solitons. Ces moyens pour cascader comprennent par exemple un premier circulateur en amont des moyens de modulation, un second circulateur en aval de ceux-ci, et un milieu de propagation non-linéaire; dans ce cas, le premier circulateur reçoit les signaux à moduler et les fournit aux moyens de modulation, reçoit des moyens de modulation des signaux modulés deux fois et les fournit aux moyens de décompression; et le second circulateur reçoit des moyens de modulation des signaux modulés une fois et les fournit au milieu de propagation, reçoit les signaux propagés à travers le milieu de propagation et les fournit aux moyens de modulation.

On peut aussi prévoir des moyens de filtrage des signaux de type solitons, choisis dans le groupe formé des filtres guidants, et des filtres guidants glissants.

L'invention propose aussi un régénérateur de signaux optiques RZ non-solitons multiplexés, comprenant:
- des moyens de démultiplexage des signaux;
- une pluralité de régénérateurs selon l'invention, tel que décrits plus haut;
- des moyens de multiplexage des signaux régénérés.

Elle propose aussi un régénérateur de signaux optiques RZ non-solitons multiplexés, comprenant:
- des moyens de synchronisation des canaux du multiplex;
- un régénérateur selon l'invention, tel que décrit plus haut.

L'invention propose encore un régénérateur de signaux optiques NRZ, comprenant:
- des moyens de conversion de signaux optiques NRZ en signaux RZ non-solitons, en amont desdits moyens de compression;
- un régénérateur selon l'invention, tel que décrit plus haut;
- des moyens de conversion des signaux optiques RZ régénérés en signaux NRZ, en aval desdits moyens de décompression.

L'invention a encore pour objet un régénérateur de signaux optiques NRZ multiplexés, comprenant:
- des moyens de démultiplexage et de conversion des signaux optiques NRZ en signaux optiques RZ non-solitons;
- une pluralité de régénérateurs selon l'invention, tels que décrits plus haut;
- des moyens de multiplexage et de conversion des signaux optiques RZ régénérés en signaux optiques NRZ multiplexés.

L'invention propose aussi un régénérateur de signaux optiques NRZ multiplexés, comprenant:
- des moyens de conversion des signaux optiques NRZ en signaux optiques RZ non-solitons;
- des moyens de synchronisation des canaux du multiplex;
- un régénérateur selon l'invention, tel que décrit plus haut.

Enfin, l'invention couvre un système optique de transmission à fibre optique, comprenant au moins un tel régénérateur.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique d'un régénérateur selon un premier mode de réalisation de l'invention;
- figure 2 l'allure des signaux en entrée (bas) et en sortie (haut) du régénérateur de la figure 1, et en sortie des moyens de compression du régénérateur;
- figure 3, une représentation schématique d'un régénérateur selon un deuxième mode de réalisation de l'invention;
- figure 4, une représentation schématique d'un régénérateur selon un troisième mode de réalisation de l'invention, adapté à des signaux RZ multiplexés.

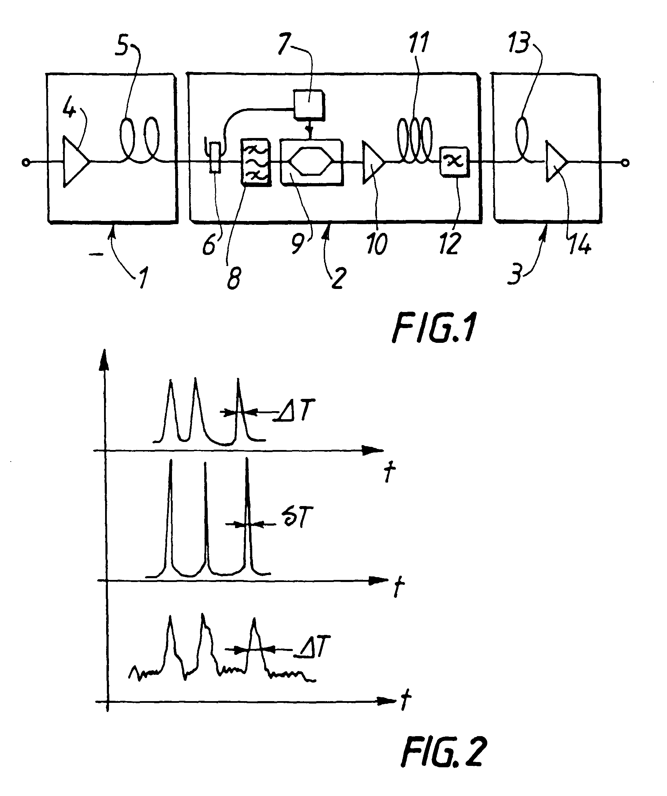

La figure 1 montre une représentation schématique d'un régénérateur selon un premier mode de réalisation de l'invention. Le régénérateur de la figure 1 est destiné à être utilisé dans un système de transmission à fibre optique à signaux RZ, tel que dans un type de système terrestre couramment installé. Le régénérateur de la figure 1 comprend des moyens de compression 1 des signaux RZ en signaux de type solitons, des moyens 2 de modulation optique synchrone des signaux de type solitons, et des moyens de décompression 3 des signaux solitons modulés en signaux RZ non-solitons.

Les moyens de compression 1, dans le mode de réalisation de la figure 1, comprennent un préamplificateur 4, qui reçoit les signaux optiques RZ à régénérer; la sortie du préamplificateur 4 est reliée à une fibre de compression 5, par exemple une fibre Kerr à forte dispersion; la dispersion de cette fibre peut varier avec la distance, de façon à optimiser le facteur de compression. Celle-ci fournit en sortie des signaux comprimés, qui se comportent comme des signaux solitons. On pourrait utiliser d'autres moyens de compression, pour convertir les signaux optiques RZ non solitons en signaux de type soliton, par exemple utiliser un filtrage spectral ou d'autres types de traitement spectral ou temporel des signaux, avec ou sans amplification, ou une combinaison de différents moyens de compression.

Les moyens de compression fournissent ainsi aux moyens de modulation 2 des signaux optiques de type solitons, i.e. se comportant comme des solitons. Les moyens de modulation appliquent à ces signaux une modulation synchrone solitons, qui peut être une modulation de phase et/ou d'amplitude. Les moyens de modulation comprennent un coupleur 6 qui reçoit les signaux en provenance de la fibre Kerr 5, et qui dérive en une partie vers un dispositif 7 de récupération d'horloge; . le reste des signaux de type soliton est fourni en entrée à un filtre 8. Le filtre 8 est par exemple un filtre guidant, c'est à dire un filtre produisant un effet de centrage du soliton sur sa fréquence nominale. Les signaux filtrés par le filtre 8 sont fournis à un modulateur synchrone 9, qui est contrôlé par l'horloge émise par le dispositif 7. Le modulateur 9 assure la modulation en phase et/ou en intensité des signaux de type soliton. La sortie du modulateur 9 est reliée à un amplificateur 10, puis à une fibre 11, qui assure la remise en forme des signaux solitons. La fibre 11 est une fibre à forte dispersion, dont le profil de dispersion peut être variable, et qui présente une longueur égale au moins à la période des signaux solitons, de sorte à arriver à obtenir un signal soliton modulé de bonne qualité. La sortie de la fibre 11 est reliée à un filtre 12, qui supprime l'horloge. La sortie du filtre 12 constitue la sortie des moyens de modulation 2.

On peut utiliser comme modulateur tout dispositif connu de modulation adapté à des signaux solitons, par exemple un NOLM( miroir non-linéaire en boucle), une fibre Kerr, un modulateur électro-optique ou opto-électronique, ou autre. On adapte en conséquence les moyens de modulation, en ajoutant ou supprimant filtres 8 ou 12, amplificateurs 10, ou fibre 11.

Les moyens de décompression 3 reçoivent le signal de type soliton régénéré en sortie du filtre 12. Ils comprennent une fibre de dilatation 13, reliée à un post-amplificateur 14. On obtient en sortie du post-amplificateur 14 des signaux optiques RZ non-solitons. On pourrait aussi utiliser d'autres moyens de décompression, pour convertir les signaux de type soliton en signaux optiques RZ non solitons.

Dans le mode de réalisation de la figure 1, on utilise une horloge récupérée sur le signal de type soliton, avant modulation. Il est clair que l'on pourrait tout aussi bien récupérer l'horloge sur les signaux de type soliton après leur modulation, sur les signaux optiques RZ non-solitons reçus en entrée des moyens de compression ou encore sur les signaux RZ régénérés; pour générer l'horloge de modulation, on pourrait aussi bien utiliser un oscillateur local à la fréquence bit du signal à régénérer, et une commande de la phase de cet oscillateur, par exemple par une boucle à verrouillage de phase ou une contre-réaction d'un autre type.

Le fonctionnement du régénérateur de la figure 1 est clair. La figure 2 montre, de bas en haut, l'allure des signaux en entrée du régénérateur, en sortie des moyens de compression 1 et en sortie du régénérateur. En entrée, le régénérateur reçoit des signaux RZ non-solitons, d'une largeur ΔT sensiblement égale à la moitié du temps bit, et qui sont affectés de gigue et de bruit d'amplitude. A la sortie des moyens de compression, les signaux sont des signaux de type soliton, i.e. d'une largeur δT plus faible par rapport au temps bit, typiquement de l'ordre de 20% du temps bit, avec de plus la puissance de crête et la largeur spectrale requises pour la propagation solitonique. Ces signaux sont comme les signaux RZ affectés de gigue temporelle et de bruit d'amplitude. En sortie du régénérateur, on obtient des signaux RZ non solitons, d'allure semblable aux signaux d'entrée, et dont la gigue temporelle a été fortement réduite par la modulation. Le bruit d'amplitude est aussi réduit du fait de la modulation synchrone, comme expliqué par exemple dans l'article de H. Kubota, voir la figure 6.

Le régénérateur de la figure 1 peut être réalisé avec des longueurs de fibre comparativement faibles, i.e. inférieures à une ou quelques dizaines de kilomètres, en choisissant des dispersions appropriées. On arrive ainsi à un régénérateur compact, susceptible d'être contenu dans un bâti ou casier électronique ("rack") standard. Ce régénérateur peut avantageusement être utilisé pour la mise à niveau de systèmes de transmission existants: il permet en augmenter le débit, sans avoir à intervenir sur le milieu de propagation lui-même, et donc avec un coût faible. On peut aussi utiliser ce régénérateur pour prolonger des systèmes de transmission existants.

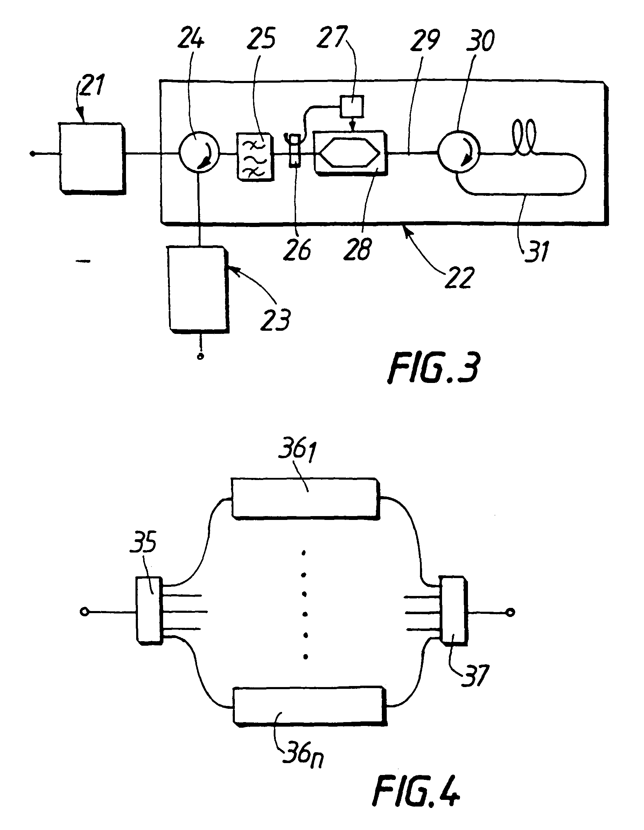

La figure 3 montre une représentation schématique d'un régénérateur selon un deuxième mode de réalisation de l'invention. Dans ce mode de réalisation, on applique deux fois la modulation synchrone aux signaux de type soliton, de sorte à réduire le bruit d'amplitude. En effet, le bruit d'amplitude est partiellement éliminé par la première modulation synchrone, du fait du rapport de cycle de l'horloge de modulation. Le bruit se disperse lors de la propagation, et est de nouveau partiellement éliminé par la seconde modulation synchrone, comme expliqué dans le passage précité de l'article de H. Kubota.

Le régénérateur de la figure 3 comprend comme celui de la figure 1, des moyens de compression 21, des moyens de modulation 22, et des moyens de décompression 23. Les moyens de compression 21 et de décompression 23 ne sont pas décrits plus en détail. Les moyens de modulation comprennent en entrée un circulateur 24, à trois bornes, qui reçoit sur une première borne les signaux de type soliton à moduler, et les transmet en sortie sur une deuxième borne. Les signaux à moduler sont fournis à un filtre étroit ou guidant 25, puis en sortie du filtre 25 à un coupleur 26 qui en dérive en une partie vers un dispositif 27 de récupération d'horloge; le reste des signaux de type soliton est fourni à un modulateur synchrone 28, qui est contrôlé par l'horloge émise par le dispositif 27. Le modulateur 28 assure la modulation en phase ou en intensité des signaux de type soliton. La sortie du modulateur 28 est reliée via un tronçon de fibre 29 à une première borne d'un second circulateur 30. Le circulateur 30 fournit les signaux modulés une fois à un milieu de propagation, par exemple une fibre soliton 31. Les signaux s'étant propagés à travers la fibre 31 reviennent vers une troisième borne du circulateur 30, et sont transmis par celui-ci au modulateur synchrone 28, via la fibre 29. La longueur totale des fibres 29 et 31 est choisie de telle sorte que les signaux fournis par le circulateur 30 au modulateur 28 soient en phase avec l'horloge. Ils sont donc modulés une deuxième fois, puis fournis à travers le filtre 25 à la deuxième borne du premier circulateur 24; celui ci les fournit en sortie sur sa troisième borne. Le filtre 25 bloque l'horloge, si cela est nécessaire. On peut ajouter au dispositif de la figure 3 d'autres filtres ou amplificateurs, en fonction des besoins.

On pourrait aussi pour atteindre les mêmes effets de réduction du bruit d'amplitude, monter en série plusieurs régénérateurs du type de celui de la figure 1, ou encore monter en série plusieurs modulateurs du type de celui de la figure 3, jusqu'à obtention d'un effet de régénération adéquat.

La figure 4 montre une représentation schématique d'un régénérateur selon un troisième mode de réalisation de l'invention, adapté à des signaux RZ multiplexés. Le régénérateur de la figure 4 est adapté au cas où un multiplexage est appliqué dans le système de transmission aux signaux optiques RZ non-solitons. Il peut s'agir d'un multiplexage temporel (OTDM), ou d'un multiplexage en longueur d'onde (WDM).

Le régénérateur de la figure 4 comprend en entrée des moyens 35 de démultiplexage des signaux optiques RZ multiplexés, qui fournissent sur une pluralité de sortie les signaux des différents canaux. Il comprend ensuite une pluralité de régénérateurs 36₁ à 36ₙ, du type de ceux décrits en référence aux figures 1 à 3, qui appliquent aux signaux RZ démultiplexés une modulation synchrone; en sortie de ces régénérateurs, le dispositif de la figure 4 comprend des moyens de multiplexage 37 des signaux régénérés. Le fonctionnement du régénérateur de la figure 4 est clair pour l'homme du métier. Ce régénérateur permet d'appliquer l'invention aussi dans le cas de signaux multiplexés.

Une alternative du dispositif de la figure 4 est un dispositif où les canaux ne sont pas démultiplexés, i.e. un seul dispositif de régénération est commun au multiplex, ce qui suppose une synchronisation adéquate de tous les canaux du multiplex au niveau du modulateur 9 de la figure 1. Une telle synchronisation peut être réalisée grâce à des moyens de synchronisation, tels que des lignes à retard, des compensateurs de dispersion, ou un choix de longueurs d'ondes pour les signaux du multiplex, moyens connus en soi par l'homme de l'art. Après la régénération, on prévoit, si nécessaire, une remise en forme du multiplex.

L'invention peut aussi s'appliquer au cas de systèmes de transmission utilisant des signaux NRZ. Dans ce cas, il suffit de prévoir, en amont et en aval d'un régénérateur du type décrit plus haut, des moyens classiques de conversion NRZ-RZ, et des moyens classiques de conversion RZ-NRZ. Il est clair de nouveau que l'on peut inverser les moyens de conversion NRZ-RZ et les moyens de démultiplexage, en fonction des configurations.

## Revendications

1. Procédé de régénération de signaux optiques RZ non solitons, comprenant les étapes de
- compression (1; 21) des signaux RZ en signaux de type solitons;
- modulation (2; 22) optique synchrone des signaux de type solitons, en utilisant une horloge;
- décompression (3; 23) des signaux solitons modulés en signaux RZ non-solitons.

2. Procédé selon la revendication 1, comprenant en outre par une étape de récupération de l'horloge sur les signaux RZ non solitons, sur les signaux de type solitons, ou sur les signaux RZ non-solitons régénérés.

3. Procédé selon la revendication 1 ou 2, dans lequel l'étape de compression comprend au moins l'une des étapes suivantes:
- traitement spectral ou temporel de signaux optiques codés, notamment par filtrage spectral;
- amplification;
- propagation des signaux dans un milieu optique non-linéaire fortement dispersif.

4. Procédé selon la revendication 1, 2 ou 3, dans lequel l'étape de décompression comprend au moins l'une des étapes suivantes:
- étalement temporel (13),
- post-amplification (14).

5. Procédé selon l'une des revendications 1 à 4, dans lequel l'étape de modulation optique synchrone des signaux de type solitons est répétée au moins deux fois.

6. Procédé selon l'une des revendications 1 à 4, comprenant au moins une étape de filtrage des signaux de type solitons, par un filtre choisi dans le groupe formé des filtres guidants, des filtres guidants glissants.

7. Procédé de régénération de signaux optiques NRZ, comprenant:
- une étape de conversion des signaux optiques NRZ en signaux RZ non-solitons;
- une étape de régénération des signaux RZ non-solitons selon le procédé d'une des revendications 1 à 6; et
- une étape de conversion des signaux optiques RZ régénérés en signaux NRZ.

8. Procédé de régénération de signaux optiques RZ non-solitons multiplexés, comprenant:
- une étape de démultiplexage (35) des signaux;
- une étape de régénération (36₁-36ₙ) des signaux démultiplexés, selon le procédé d'une des revendications 1 à 6;
- une étape de multiplexage (37) des signaux régénérés.

9. Procédé de régénération de signaux optiques RZ non-solitons multiplexés, comprenant:
- une étape de synchronisation des canaux du multiplex;
- une étape de régénération des signaux des canaux synchronisés, selon le procédé d'une des revendications 1 à 6.

10. Procédé de régénération de signaux optiques NRZ, comprenant:
- une étape de conversion des signaux optiques NRZ en signaux optiques RZ non-solitons;
- une étape de régénération des signaux optiques RZ non-solitons selon le procédé d'une des revendications 1 à 6; et
- une étape de conversion des signaux optiques RZ régénérés en signaux optiques NRZ.

11. Procédé de régénération de signaux optiques NRZ multiplexés, comprenant:
- une étape de démultiplexage et de conversion des signaux optiques NRZ en signaux optiques RZ non-solitons;
- une étape de régénération des signaux optiques RZ, selon le procédé d'une des revendications 1 à 6;
- une étape de multiplexage et de conversion des signaux optiques RZ régénérés en signaux optiques NRZ multiplexés.

12. Procédé de régénération de signaux optiques NRZ multiplexés, comprenant:
- une étape de conversion des signaux optiques NRZ en signaux optiques RZ non-solitons;
- une étape de synchronisation des canaux du multiplex;
- une étape de régénération des signaux optiques RZ non-solitons des canaux synchronisés, selon le procédé d'une des revendications 1 à 6; et
- une étape de conversion des signaux optiques RZ régénérés en signaux optiques NRZ.

13. Un régénérateur de signaux optiques RZ non solitons, comprenant:
- des moyens (1; 21) de compression des signaux RZ en signaux de type solitons;
- des moyens (2; 22) de modulation optique synchrone des signaux de type solitons, en utilisant une horloge;
- des moyens (3; 23) de décompression des signaux solitons modulés en signaux RZ non-solitons.

14. Régénérateur selon la revendication 13, dans lequel les moyens de modulation comprennent des moyens (6, 7; 26, 27) de récupération de l'horloge à partir des signaux RZ non solitons, des signaux de type solitons, ou des signaux RZ non-solitons régénérés.

15. Régénérateur selon la revendication 13 ou 14, dans lequel les moyens de compression comprennent au moins l'un des moyens suivants:
- des moyens de traitement spectral ou temporel de signaux optiques codés, notamment des moyens de filtrage spectral;
- des moyens d'amplification (4);
- un milieu optique non-linéaire fortement dispersif (5), notamment à dispersion variable.

16. Régénérateur selon la revendication 13, 14 ou 15, dans lequel les moyens de décompression comprennent au moins l'un des moyens suivants:
- des moyens d'étalement temporel (13);
- des moyens de post-amplification (14).

17. Régénérateur selon l'une des revendications 13 à 16, dans lequel les moyens de compression ou les moyens de décompression comprennent une longueur de fibre optique (5; 13).

18. Régénérateur selon l'une des revendications 13 à 17, comprenant des moyens pour cascader les moyens de modulation, pour au moins une partie des signaux de type solitons.

19. Régénérateur selon la revendication 18, dans lequel les moyens pour cascader comprennent un premier circulateur (24) en amont des moyens de modulation (28), un second circulateur (30) en aval de ceux-ci, et un milieu de propagation non-linéaire (31),
en ce que le premier circulateur (24) reçoit les signaux à moduler et les fournit aux moyens de modulation (28), reçoit des moyens de modulation (28) des signaux modulés deux fois et les fournit aux moyens de décompression; et
en ce que le second circulateur (30) reçoit des moyens de modulation (28) des signaux modulés une fois et les fournit au milieu de propagation (31), reçoit les signaux propagés à travers le milieu de propagation (31) et les fournit aux moyens de modulation (28).

20. Régénérateur selon l'une des revendications 13 à 19, comprenant des moyens de filtrage des signaux de type solitons, choisis dans le groupe formé des filtres guidants, et des filtres guidants glissants.

21. Régénérateur de signaux optiques RZ non-solitons multiplexés, comprenant:
- des moyens (35) de démultiplexage des signaux;
- une pluralité de régénérateurs (36₁-36ₙ) selon l'une des revendications 13 à 18;
- des moyens (37) de multiplexage des signaux régénérés.

22. Régénérateur de signaux optiques RZ non-solitons multiplexés, comprenant:
- des moyens de synchronisation des canaux du multiplex;
- un régénérateur selon l'une des revendications 13 à 20.

23. Régénérateur de signaux optiques NRZ, comprenant:
- des moyens de conversion de signaux optiques NRZ en signaux RZ non-solitons, en amont desdits moyens de compression;
- un régénérateur selon l'une des revendications 13 à 20;
- des moyens de conversion des signaux optiques RZ régénérés en signaux NRZ, en aval desdits moyens de décompression.

24. Régénérateur de signaux optiques NRZ multiplexés, comprenant:
- des moyens de démultiplexage et de conversion des signaux optiques NRZ en signaux optiques RZ non-solitons;
- une pluralité de régénérateurs selon l'une des revendications 13 à 20;
- des moyens de multiplexage et de conversion des signaux optiques RZ régénérés en signaux optiques NRZ multiplexés.

25. Régénérateur de signaux optiques NRZ multiplexés, comprenant:
- des moyens de conversion des signaux optiques NRZ en signaux optiques RZ non-solitons;
- des moyens de synchronisation des canaux du multiplex;
- un régénérateur selon l'une des revendications 13 à 20.

26. Système optique de transmission à fibre optique, comprenant au moins un régénérateur selon l'une des revendications 13 à 25.

## Claims

1. A method of regenerating non-soliton RZ optical signals, the method comprising the following steps:
a compression step (1; 21) whereby the RZ signals are compressed into soliton-type signals;
a modulation step (2; 22) whereby synchronous optical modulation is performed on the soliton-type signals, by using a clock; and
a decompression step (3; 23) whereby the modulated soliton signals are decompressed into non-soliton RZ signals.

2. A method according to claim 1, further comprising a clock recovery step whereby the clock is recovered from the non-soliton RZ signals, from the soliton-type signals, or from the regenerated non-soliton RZ signals.

3. A method according to claim 1 or 2, in which the compression step comprises at least one of the following steps:
performing spectrum or time processing on encoded optical signals, in particular by spectrum filtering;
amplification; and
causing the signals to propagate along a highly dispersive non-linear optical medium.

4. A method according to claim 1, 2, or 3, in which the decompression step comprises at least one of the following steps:
time spreading (13); and
post-amplification (14).

5. A method according to any one of claims 1 to 4, in which the modulation step whereby synchronous optical modulation is performed on the soliton-type signals is repeated so that it is performed at least twice.

6. A method according to any one of claims 1 to 4, comprising at least one filtering step whereby the soliton-type signals are filtered by a filter chosen from the group formed of guiding filters and sliding guiding filters.

7. A method of regenerating NRZ optical signals, the method comprising:
an NRZ-to-RZ conversion step whereby the NRZ optical signals are converted into non-soliton RZ signals;
a regeneration step whereby the non-soliton RZ signals are regenerated using the method of any one of claims 1 to 6; and
an RZ-to-NRZ conversion step whereby the regenerated RZ optical signals are converted into NRZ signals.

8. A method of regenerating multiplexed non-soliton RZ optical signals, the method comprising:
a demultiplexing step (35) whereby the signals are demultiplexed;
a regeneration step (36₁-36ₙ) whereby the demultiplexed signals are regenerated using the method of any one of claims 1 to 6; and
a multiplexing step (37) whereby the regenerated signals are multiplexed.

9. A method of regenerating multiplexed non-soliton RZ optical signals, the method comprising:
a synchronization step whereby the channels of the multiplex are synchronized; and
a regeneration step whereby the signals of the synchronized channels are regenerated using the method of any one of claims 1 to 6.

10. A method of regenerating NRZ optical signals, the method comprising:
an NRZ-to-RZ conversion step whereby the NRZ optical signals are converted into non-soliton RZ optical signals;
a regeneration step whereby the non-soliton RZ optical signals are regenerated using the method of any one of claims 1 to 6; and
an RZ-to-NRZ conversion step whereby the regenerated RZ optical signals are converted into NRZ optical signals.

11. A method of regenerating multiplexed NRZ optical signals, the method comprising:
a demultiplexing and NRZ-to-RZ conversion step whereby the NRZ optical signals are demultiplexed and converted into non-soliton RZ optical signals;
a regeneration step whereby the RZ optical signals are regenerated using the method of any one of claims 1 to 6; and
a multiplexing and RZ-to-NRZ conversion step whereby the regenerated RZ optical signals are multiplexed and converted into multiplexed NRZ optical signals.

12. A method of regenerating multiplexed NRZ optical signals, the method comprising:
an NRZ-to-RZ conversion step whereby the NRZ optical signals are converted into non-soliton RZ optical signals;
a synchronization step, whereby the channels of the multiplex are synchronized;
a regeneration step whereby the non-soliton RZ optical signals of the synchronized channels are regenerated using the method of any one of claims 1 to 6; and
an RZ-to-NRZ conversion step whereby the regenerated RZ optical signals are converted into NRZ optical signals.

13. A regenerator for regenerating non-soliton RZ optical signals, the regenerator comprising
compression means (1; 21) for compressing the RZ signals into soliton-type signals;
modulation means (2; 22) for performing synchronous optical modulation on the soliton-type signals, by using a clock; and
decompression means (3; 23) for decompressing the modulated soliton signals into non-soliton RZ signals.

14. A regenerator according to claim 13, in which the modulation means include clock recovery means (6, 7; 26, 27) for recovering the clock from the non-soliton RZ signals, from the soliton-type signals, or from the regenerated non-soliton RZ signals.

15. A regenerator according to claim 13 or 14, in which the compression means comprise at least one of the following means:
means for performing spectrum or time processing on encoded optical signals, in particular spectrum filtering means;
amplification means (4); and
a highly dispersive non-linear optical medium (5), in particular of variable dispersion.

16. A regenerator according to claim 13, 14, or 15, in which the decompression means comprise at least one of the following means:
time spreading means (13); and
post-amplification means (14).

17. A regenerator according to any one of claims 13 to 16, in which at least one of the compression means and of the decompression means comprises a length of optical fiber (5; 13).

18. A regenerator according to any one of claims 13 to 17, comprising cascading means for cascading the modulation means, for at least a portion of the soliton-type signals.

19. A regenerator according to claim 18, in which the cascading means comprise a first circulator (24) upstream from the modulation means (28), a second circulator (30) downstream therefrom, and a non-linear propagation medium (31);
the first circulator (24) receives the signals to be modulated and delivers them to the modulation means (28), and it receives signals that have been modulated twice from the modulation means (28) and delivers them to the decompression means; and
the second circulator (30) receives signals that have been modulated once from the modulation means (28) and delivers them to the propagation means (31), and it receives the signals that have propagated along the propagation medium (31) and delivers them to the modulation means (28).

20. A regenerator according to any one of claims 13 to 19, comprising filtering means for filtering the soliton-type signals, which means are chosen from the group formed of guiding filters and of sliding guiding filters.

21. A regenerator for regenerating multiplexed non-soliton RZ optical signals, the regenerator comprising:
demultiplexing means (35) for demultiplexing the signals;
a plurality of regenerators (36₁-36ₙ) according to any one of claims 13 to 18; and
multiplexing means (37) for multiplexing the regenerated signals.

22. A regenerator for regenerating multiplexed non-soliton RZ optical signals, the regenerator comprising:
synchronization means for synchronizing the channels of the multiplex; and
a regenerator according to any one of claims 13 to 20.

23. A regenerator for regenerating NRZ optical signals, the regenerator comprising:
NRZ-to-RZ conversion means for converting the NRZ optical signals into non-soliton RZ optical signals, upstream from said compression means;
a regenerator according to any one of claims 13 to 20; and
RZ-to-NRZ conversion means for converting the regenerated RZ optical signals into NRZ optical signals, downstream from said decompression means.

24. A regenerator for regenerating multiplexed NRZ optical signals, the regenerator comprising:
demultiplexing and NRZ-to-RZ conversion means for demultiplexing the NRZ optical signals and converting them into non-soliton RZ optical signals;
a plurality of regenerators according to any one of claims 13 to 20; and
multiplexing and RZ-to-NRZ conversion means for multiplexing the regenerated RZ optical signals and converting them into multiplexed NRZ optical signals.

25. A regenerator for regenerating multiplexed NRZ optical signals, the regenerator including:
NRZ-to-RZ conversion means for converting the NRZ optical signals into non-soliton RZ optical signals;
synchronization means for synchronizing the channels of the multiplex; and
a regenerator according to any one of claims 13 to 20.

26. An optical-fiber optical transmission system including at least one regenerator according to any one of claims 13 to 25.

## Patentansprüche

1. Verfahren zur Regenerierung von nicht-solitonischen optischen RZ-Signalen mit den Schritten:
- Kompression (1; 21) der RZ-Signale in Signale vom Solitonentyp;
- Synchronische optische Modulation (2; 22) der Signale vom Solitonentyp unter Verwendung eines Taktes;
- Dekompression (3; 23) der modulierten Solitonensignale in nicht-solitonische RZ-Signale.

2. Verfahren nach Anspruch 1 mit einem weiteren Schritt der Taktwiedergewinnung an den nicht-solitonischen RZ-Signalen, an den Signalen vom Solitonentyp oder an den regenerierten nicht-solitonischen RZ-Signalen.

3. Verfahren nach Anspruch 1 oder 2, bei dem der Kompressionsschritt wenigstens einen der folgenden Schritte umfasst:
- Spektrale oder zeitliche Verarbeitung von codierten optischen Signalen, insbesondere durch spektrale Filterung;
- Verstärkung;
- Ausbreitung der Signale in einem stark dispersiven nicht-linearen optischen Medium.

4. Verfahren nach Anspruch 1, 2 oder 3, bei dem der Dekompressionsschritt wenigstens einen der folgenden Schritte umfasst:
- Zeitliche Spreizung (13),
- Nachverstärkung (14).

5. Verfahren nach einem der Ansprüche 1 bis 4, bei dem der Schritt der synchronen optischen Modulation der Signale vom Solitonentyp wenigstens zweimal wiederholt wird.

6. Verfahren nach einem der Schritte 1 bis 4 mit wenigstens einem Schritt der Filterung der Signale vom Solitonentyp durch ein Filter, das aus der durch leitende Filter und gleitende leitende Filter gebildeten Gruppe gewählt ist.

7. Verfahren zur Regenerierung von optischen NRZ-Signalen mit:
- einem Schritt der Umwandlung der optischen NRZ-Signale in nicht-solitonische RZ-Signale,
- einem Schritt der Regenerierung der nicht-solitonischen RZ-Signale nach dem Verfahren nach einem der Ansprüche 1 bis 6 und
- einem Schritt der Umwandlung der regenierten optischen RZ-Signale in NRZ-Signale.

8. Verfahren zur Regenerierung von gemultiplexten nicht-solitonischen optischen RZ-Signalen mit:
- einem Schritt der Demultiplexierung (35) der Signale;
- einem Schritt der Regenerierung (36₁ bis 36ₙ) der gedemultiplexten Signale nach dem Verfahren nach einem der Ansprüche 1 bis 6;
- einem Schritt der Multiplexierung (37) der regenerierten Signale.

9. Verfahren zur Regenerierung von gemultiplexten nicht-solitonischen optischen RZ-Signalen mit:
- einem Schritt der Synchronisierung der Kanäle des Multiplex;
- einem Schritt der Regenerierung der Signale der synchronisierten Kanäle nach dem Verfahren nach einem der Ansprüche 1 bis 6.

10. Verfahren zur Regenerierung von optischen NRZ-Signalen mit:
- einem Schritt der Umwandlung der optischen NRZ-Signale in nicht-solitonische optische RZ-Signale;
- einem Schritt der Regenerierung der nicht-solitonischen optischen RZ-Signale nach dem Verfahren nach einem der Ansprüche 1 bis 6; und
- einem Schritt der Umwandlung der regenerierten optischen RZ-Signale in optische NRZ-Signale.

11. Verfahren zur Regenerierung von gemultiplexten optischen NRZ-Signalen mit:
- einem Schritt der Demultiplexierung und Umwandlung der optischen NRZ-Signale in nicht-solitonische optische RZ-Signale;
- einem Schritt der Regenerierung der optischen RZ-Signale nach dem Verfahren nach einem der Ansprüche 1 bis 6;
- einem Schritt der Multiplexierung und Umwandlung der regenerierten optischen RZ-Signale in gemultiplexte optische NRZ-Signale.

12. Verfahren zur Regenerierung von gemultiplexten optischen NRZ-Signalen mit:
- einem Schritt der Umwandlung der optischen NRZ-Signale in nicht-solitonische optische RZ-Signale;
- einem Schritt der Synchronisierung der Kanäle des Multiplex;
- einem Schritt der Regenerierung der nicht-solitonischen optischen RZ-Signale der synchronisierten Kanäle nach dem Verfahren nach einem der Ansprüche 1 bis 6; und
- einem Schritt der Umwandlung der regenerierten optischen RZ-Signale in optische NRZ-Signale.

13. Regenerator für nicht-solitonische optische RZ-Signale mit:
- Mitteln (1; 21) zur Kompression von RZ-Signalen in Signale vom Solitonentyp;
- Mitteln (2; 22) zur synchronen optischen Modulation der Signale vom Solitonentyp unter Verwendung eines Taktes;
- Mitteln (3; 23) zur Dekompression der modulierten Solitonensignale in nicht-solitonische RZ-Signale.

14. Regenerator nach Anspruch 13, bei dem die Mittel zur Modulation Mittel (6, 7; 26, 27) zur Taktwiedergewinnung aus den nicht-solitonischen RZ-Signalen, den Signalen vom Solitonentyp oder den regenerierten nicht-solitonischen RZ-Signalen umfassen.

15. Regenerator nach Anspruch 13 oder 14, bei dem die Mittel zur Kompression wenigstens eines der folgenden Mittel umfassen:
- Mittel zur spektralen oder zeitlichen Verarbeitung von codierten optischen Signalen, insbesondere Mittel zur spektralen Filterung;
- Verstärkungsmittel (4) ;
- ein stark dispersives optisches Medium (5), insbesondere mit variabler Dispersion.

16. Regenerator nach Anspruch 13, 14 oder 15, bei dem die Mittel zur Dekompression wenigstens eines der folgenden Mittel umfassen:
- Mittel zur zeitlichen Spreizung (13) ;
- Mittel zur Nachverstärkung (14).

17. Regenerator nach einem der Ansprüche 13 bis 16, bei dem die Mittel zur Kompression oder die Mittel zur Dekompression eine Länge von optischer Faser (5; 13) umfassen.

18. Regenerator nach einem der Ansprüche 13 bis 17, mit Mitteln zum Kaskadieren der Mittel zur Modulation für wenigstens einen Teil der Signale vom Solitonentyp.

19. Regenerator nach Anspruch 18, bei dem die Mittel zum Kaskadieren einen ersten Zirkulator (24), der den Mitteln zur Modulation (28) vorgeschaltet ist, einen zweiten Zirkulator (30), der diesen nachgeschaltet ist, und ein nicht-lineares Ausbreitungsmedium (31) umfassen,
dass der erste Zirkulator (24) die zu modulierenden Signale empfängt und sie an die Mittel zur Modulation (28) liefert, von den Mitteln zur Modulation (28) zweifach modulierte Signale empfängt und sie an die Mittel zur Dekompression liefert; und
dass der zweite Zirkulator (30) von den Mitteln zur Modulation (28) einfach modulierte Signale empfängt und sie an das Ausbreitungsmedium (31) liefert und durch das Ausbreitungsmedium (31) ausgebreitete Signale empfängt und sie an die Mittel zur Modulation (28) liefert.

20. Regenerator nach einem der Ansprüche 13 bis 19, mit Mitteln zum Filtern der Signale vom Solitonentyp, die aus der durch leitende Filter und gleitende leitende Filter gebildeten Gruppe ausgewählt sind.

21. Regenerator für gemultiplexte nicht-solitonische optische RZ-Signale mit:
- Mitteln (35) zur Demultiplexierung der Signale;
- einer Mehrzahl von Regeneratoren (36₁ bis 36ₙ) nach einem der Ansprüche 13 bis 18;
- Mitteln (37) zur Multiplexierung der regenerierten Signale.

22. Regenerator für gemultiplexte nicht-solitonische optische RZ-Signale mit:
- Mitteln zur Synchronisierung der Kanäle des Multiplex;
- einem Regenerator nach einem der Ansprüche 13 bis 20.

23. Regenerator für optische NRZ-Signale mit:
- Mitteln zur Umwandlung von optischen NRZ-Signalen in nicht-solitonische RZ-Signale, die den Mitteln zur Kompression vorgeschaltet sind;
- einem Regenerator nach einem der Ansprüche 13 bis 20;
- Mitteln zur Umwandlung der regenerierten optischen RZ-Signale in NRZ-Signale, die den Mitteln zur Dekompression nachgeschaltet sind.

24. Regenerator für gemultiplexte optische NRZ-Signale mit:
- Mitteln zur Demultiplexierung und Umwandlung der optischen NRZ-Signalen in nicht-solitonische optische RZ-Signale;
- einer Mehrzahl von Regeneratoren nach einem der Ansprüche 13 bis 20;
- Mitteln zur Multiplexierung und Umwandlung der regenerierten optischen RZ-Signale in gemultiplexte optische NRZ-Signale.

25. Regenerator für gemultiplexte optische NRZ-Signale mit:
- Mitteln zur Umwandlung von optischen NRZ-Signalen in nicht-solitonische optische RZ-Signale;
- Mitteln zur Synchronisation der Kanäle des Multiplex;
- einem Regenerator nach einem der Ansprüche 13 bis 20;

26. Optisches Übertragungssystem mit optischer Faser, das wenigstens einen Regenerator nach einem der Ansprüche 13 bis 25 umfasst.
